# EUROPEAN PATENT APPLICATION

(11) **EP 1 796 121 A1**
(43) Date of publication of application: **13.06.2007**
(21) Application number: 05770650.9
(22) Date of filing: 11.08.2005
(51) Int. Cl.: H01J 9/24, H01J 9/22, H01J 9/227, H01J 31/12, H01J 9/39, H01J 29/32, H01J 29/87

(54) **METHOD FOR MANUFACTURING IMAGE DISPLAY AND IMAGE DISPLAY**

(30) Priority: 16.08.2004 JP 2004236625
(71) Applicant: KABUSHIKI KAISHA TOSHIBA, Tokyo 105-8001 (JP)
(72) Inventor: ISHIKAWA, Satoshi, c/o Intel. Prop. Div. Toshiba Corporation, Minato-ku, Tokyo 105-8001 (JP); HIRAHARA, Sachiko, c/o Intel. Prop. Div. Toshiba Corporation, Minato-ku, Tokyo 105-8001 (JP); HIROSAWA, Daiji, c/o Intel. Prop. Div. Toshiba Corporation, Minato-ku, Tokyo 105-8001 (JP)
(74) Representative: HOFFMANN EITLE
(86) International application number: PCT/JP2005/014747
(87) International publication number: WO 2006/019033

(57) **Abstract**

In a method of manufacturing an image display device, a molding die (36) having a plurality of bottomed spacer forming holes (40) is prepared, and the individual spacer forming holes of the molding die are loaded with a spacer forming material consisting mainly of glass. The molding die filled with the spacer forming material is brought into close contact with a glass substrate (10), which constitutes a first substrate, in a manner such that the spacer forming holes face the glass substrate. The molding die is released with the spacer forming material left on the glass substrate after the spacer forming material is cured.

Based on this method, there is obtained an image display device such that a plurality of spacers can be easily provided with high positional accuracy without using an adhesive and mass production and reduction in manufacturing cost are enabled.

## Description

### Technical Field

This invention relates to a manufacturing method for an image display device, provided with substrates located opposite each other and spacers arranged between the substrates, and the image display device.

### Background Art

In recent years, various flat-type image display devices have been noticed as a next generation of lightweight, thin display devices to replace cathode-ray tubes (CRTs). For example, a surface-conduction electron emission device (SED) has been developed as a kind of a field emission device (FED) that functions as a flat-type display device.

This SED comprises a first substrate and a second substrate that are located opposite each other with a predetermined space between them. These substrates have their respective peripheral portions joined together by a rectangular sidewall, thereby forming a vacuum envelope. Three-color phosphor layers and a metal back layer are formed on the inner surface of the first substrate. Arranged on the inner surface of the second substrate are a large number of electron emitting elements, which correspond to pixels, individually, and serve as electron emission sources that excite the phosphors. Each electron emitting element is composed of an electron emitting portion, a pair of electrodes that apply voltage to the electron emitting portion, etc.

For the SED described above, it is important to maintain a high degree of vacuum of about 10⁻⁴ Pa in the space between the first substrate and the second substrate, that is, in the vacuum envelope. If the degree of vacuum is low, the life performance of the electron emitting elements, and therefore, the life performance of the device inevitably decrease. Since a vacuum is defined between the first substrate and the second substrate, moreover, an atmospheric load acts on the first substrate and the second substrate. In order to support the atmospheric load that acts on these substrates and maintain the gap between the substrates, therefore, a large number of plate-like or columnar spacers are arranged between the two substrates.

In order to arrange the spacers over the whole surfaces of the first substrate and the second substrate, the spacers must be in the form of a very thin plate or a very slender column each lest they touch the phosphors on the first substrate or the electron emitting elements on the second substrate. Since these spacers must inevitably be set very close to the electron emitting elements, a dielectric material must be used for the spacers. If the first substrate and the second substrate are to be thinned, at the same time, more spacers are required.

Normally, independent spacers are arranged by a method in which the spacers are fixed pinpointed between the phosphor layers or electron emitting elements on the substrate by using an adhesive, such as fritted glass, after the spacers are formed. Proposed in, for example, Jpn. Pat. Appln. KOKAI Publication No. 2001-272927, moreover, is a method in which a large number of spacers are formed with high positional accuracy on a metal plate that is previously formed with holes through which electron beams pass, and the spacers formed on the metal plate are aligned with a first substrate or a second substrate.

In the case of the former method, however, fixing the large number of spacers one by one on the substrate with the adhesive is not suited for mass production and entails an increase in manufacturing cost. If the adhesive is used, moreover, some problems are caused including separation of the spacers in a heat process during manufacture, disturbance of electric fields attributable to protrusion of the adhesive, contamination of phosphors, etc. Although the large number of spacers can be collectively aligned with the substrate, in the case of the latter method, a supporting substrate for supporting the spacers must be provided besides the first and second substrates, so that the number of parts is increased, and the structure is complicated.

### Disclosure of Invention

This invention has been made in consideration of these circumstances, and its object is to provide a manufacturing method for an image display device, in which a plurality of spacers can be easily provided with high accuracy without using any supporting substrate, and the image display device.

In order to achieve the object, there is provided a method of manufacturing an image display device, which comprises a first substrate formed having a phosphor screen including a phosphor layer and a light shielding layer, a second substrate located opposite the first substrate across a gap and provided with a plurality of electron emission sources which excite the phosphor screen, and a plurality of spacers which are arranged between the first substrate and the second substrate and support an atmospheric load acting on the first and second substrates, the method of manufacturing an image display device comprising:
preparing a molding die having a plurality of bottomed spacer forming holes; filling in the individual spacer forming holes of the molding die with a spacer forming material consisting mainly of glass; bringing the molding die filled with the spacer forming material into close contact with a glass substrate, which constitutes the first substrate, in a manner such that the spacer forming holes face the glass substrate; releasing the molding die with the spacer forming material left on the glass substrate after curing the spacer forming material with the molding die in close contact with the glass substrate; and forming the plurality of spacers severally fixed to the glass substrate by firing and vitrifying the spacer forming material on the glass substrate.

According to another aspect of the invention, there is provided a method of manufacturing an image display device, which comprises a first substrate formed having a phosphor screen including a phosphor layer and a light shielding layer, a second substrate located opposite the first substrate across a gap and provided with a plurality of electron emission sources which excite the phosphor screen, and a plurality of spacers which are provided between the first substrate and the second substrate and support an atmospheric load acting on the first and second substrates, the method of manufacturing an image display device comprising:
preparing a molding die having a plurality of bottomed spacer forming holes and a first substrate formed having a phosphor screen; filling in the individual spacer forming holes of the molding die with a spacer forming material consisting mainly of glass; bringing the molding die filled with the spacer forming material into close contact with the first substrate in a manner such that the spacer forming holes face the light shielding layer on the first substrate; releasing the molding die with the spacer forming material left on the first substrate after curing the spacer forming material with the molding die in close contact with the first substrate; and forming the plurality of spacers severally fixed on the light shielding layer by firing and vitrifying the spacer forming material on the first substrate.

According to still another aspect of the invention, there is provided an image display device comprising: a first substrate formed having a phosphor screen including a phosphor layer and a light shielding layer; a second substrate located opposite the first substrate across a gap and provided with a plurality of electron emission sources which excite the phosphor screen; and a plurality of spacers which are arranged between the first substrate and the second substrate and support an atmospheric load acting on the first and second substrates, the plurality of spacers being directly fixedly formed on an inner surface of the first substrate by firing and vitrifying a spacer forming material consisting mainly of glass.

According to another aspect of the invention, there is provided an image display device comprising: a first substrate formed having a phosphor screen including a phosphor layer and a light shielding layer; a second substrate located opposite the first substrate across a gap and provided with a plurality of electron emission sources which excite the phosphor screen; and a plurality of spacers which are arranged between the first substrate and the second substrate and support an atmospheric load acting on the first and second substrates, the plurality of spacers being directly fixedly formed on the light shielding layer on the first substrate by firing and vitrifying a spacer forming material consisting mainly of glass.

### Brief Description of Drawings

FIG. 1 is a perspective view showing an SED according to a first embodiment of this invention;
FIG. 2 is a perspective view of the SED broken away along line II-II of FIG. 1;
FIG. 3 is a sectional view enlargedly showing the SED;
FIG. 4 is a plan view showing a first substrate of the SED;
FIG. 5 is a sectional view showing a manufacturing process for the first substrate and spacers of the SED;
FIG. 6 is a sectional view showing an assembly obtained by bringing a molding die and the first substrate into close contact with each other in the aforesaid manufacturing process;
FIG. 7 is a sectional view showing a state in which the molding die is released;
FIG. 8 is a sectional view showing an arrangement for forming a phosphor screen on the first substrate by ink jetting;
FIG. 9 is a sectional view showing a step of forming a metal back on the first substrate in the aforesaid process;
FIG. 10 is a sectional view showing a step of forming a getter film on the first substrate in the aforesaid process;
FIG. 11 is a sectional view enlargedly showing an SED according to a second embodiment of this invention;
FIG. 12 is a sectional view showing a manufacturing process for a first substrate and spacers of the SED according to the second embodiment;
FIG. 13 is a sectional view showing an assembly obtained by bringing a molding die and the first substrate into close contact with each other in the aforesaid manufacturing process;
FIG. 14 is a sectional view showing a state in which the molding die is released;
FIG. 15 is a sectional view showing a step of forming a metal back on the first substrate in the aforesaid process;
FIG. 16 is a sectional view showing a step of forming a getter film on the first substrate in the aforesaid process;
FIG. 17 is a sectional view enlargedly showing an SED according to a third embodiment of this invention;
FIG. 18 is a sectional view showing a manufacturing process for a first substrate and spacers of the SED according to the third embodiment;
FIG. 19 is a sectional view showing an assembly obtained by bringing a molding die and the first substrate into close contact with each other in the aforesaid manufacturing process;
FIG. 20 is a sectional view showing a state in which the molding die is released; and
FIG. 21 is a sectional view showing a step of forming a getter film on the first substrate in the aforesaid process.

### Best Mode for Carrying Out the Invention

A first embodiment in which this invention is applied to an SED as a flat-type image display device will now be described in detail with reference to the drawings.

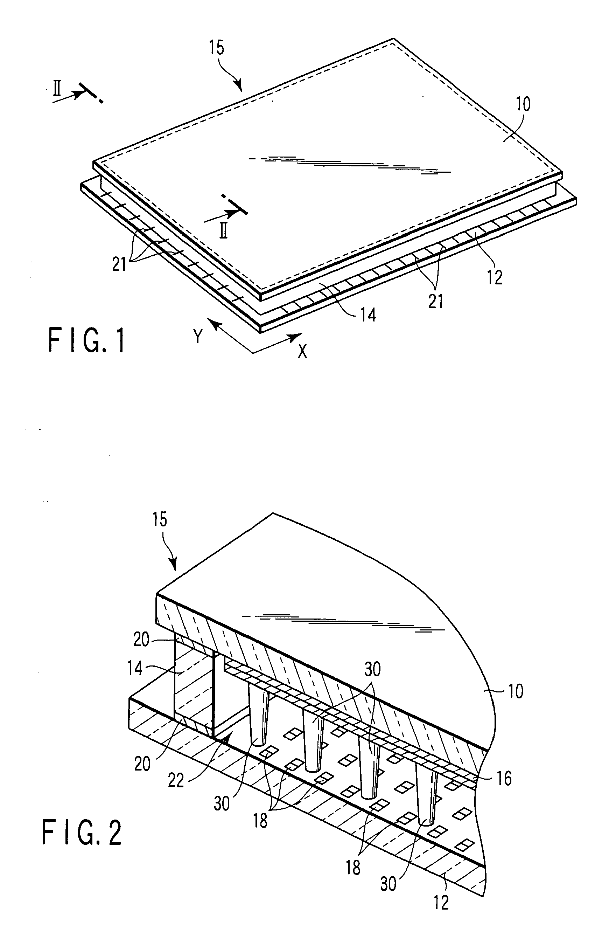

As shown in FIGS. 1 to 3, the SED comprises a first substrate 10 and a second substrate 12, which are formed of a rectangular glass plate each. These substrates are located opposite each other with a gap of about 1.0 to 2.0 mm between them. The first substrate 10 and the second substrate 12 have their respective peripheral edge portions joined together by a sidewall 14 of glass in the form of a rectangular frame, thereby forming a flat rectangular vacuum envelope 15 of which the inside is kept at a high vacuum of about 10⁻⁴ Pa or better.

A phosphor screen 16 that functions as a phosphor screen is formed on the inner surface of the first substrate 10. As described later, the phosphor screen 16 has phosphor layers R, G and B, which glow red, green, and blue, respectively, and a matrix-shaped light shielding layer 11. A metal back 17 that consists mainly of, for example, aluminum is formed on the phosphor screen 16, and moreover, a getter film 19 is formed overlapping the metal back.

Provided on the inner surface of the second substrate 12 are a large number of surface-conduction electron emitting elements 18, which individually emit electron beams as electron sources for exciting the phosphor layers R, G and B of the phosphor screen 16. These electron emitting elements 18 are arrayed in a plurality of columns and a plurality of rows corresponding to the pixels. Each electron emitting element 18 is formed of an electron emitting portion (not shown), a pair of element electrodes that apply voltage to the electron emitting portion, etc. A large number of wires 21 for driving the electron emitting elements 18 are provided in a matrix on the inner surface of the second substrate 12, and their respective end portions are led out of the vacuum envelope 15. The sidewall 14 that functions as a joint member is sealed to the peripheral edge portion of the first substrate 10 and the peripheral edge portion of the second substrate 12 with a sealant 20 of, for example, low-melting-point glass or low-melting-point metal, whereby these substrates are joined together.

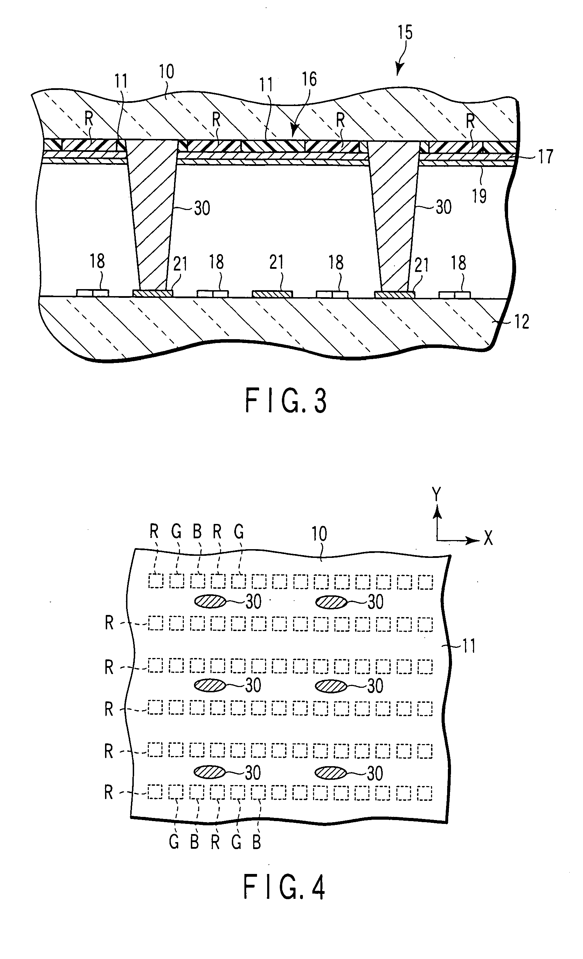

In the phosphor screen 16 provided on the inner surface of the display screen 10, as shown in FIGS. 3 and 4, the phosphor layers R, G and B are formed having a rectangular shape each. If the longitudinal direction of the first substrate 10 and the transverse direction perpendicular thereto are a first direction X and a second direction Y, respectively, the phosphor layers R, G and B are alternately arrayed with predetermined gaps between them in the first direction X, and the phosphor layers in each same color are arrayed with predetermined gaps between them in the second direction. The phosphor layers R, G and B are situated opposite their corresponding electron emitting elements 18, individually. The phosphor screen 16 has the light shielding layer 11 that is black. The light shielding layer 11 has a rectangular frame portion extending along the peripheral edge portion of the first substrate 10 and a matrix portion extending in the form of a matrix between phosphor layers R, G and B inside the rectangular frame portion.

As shown in FIGS. 2 to 4, the SED is provided with a large number of spacers 30 that are arranged between the first substrate 10 and the second substrate 12. These spacers 30 are columnar and are set up integrally on the inner surface of the first substrate 10. Specifically, the spacers 30 are directly fixedly formed on the surface of the first substrate 10 by firing and vitrifying a spacer forming material as a dielectric material that consists mainly of glass.

The spacers 30 are set up in positions corresponding to the light shielding layer 11 between the phosphor layers that adjoin in the second direction Y. The respective extended ends of the spacers 3 abut on the inner surface of the second substrate 12, that is, on the wires 21 provided on the inner surface of the second substrate 12 in this case. Each of the spacers 30 is tapered so that its diameter is reduced from its proximal end on the side of the first substrate 10 toward its extended end. The cross section of each spacer 30 along a direction parallel to the inner surface of the first substrate 10 is substantially elliptical.

The respective extended ends of the plurality of spacers 30 set up on the first substrate 10 abut against the inner surface of the second substrate 12, thereby supporting an atmospheric load that acts on the first and second substrates and keeping the space between the substrates at a predetermined value.

In displaying an image on the SED, an anode voltage of, e.g., 8 kV is applied to the phosphor screen 16 and the metal back 17, and the electron beams emitted from the electron emitting elements 18 are accelerated by the anode voltage and collided with the phosphor screen 16. Thereupon, the corresponding phosphor layers R, G and B of the phosphor screen 16 are excited to luminescence and display a color image.

The following is a description of a manufacturing method for the SED constructed in this manner. A manufacturing method for the first substrate 10 and the spacers 30 will be described first.

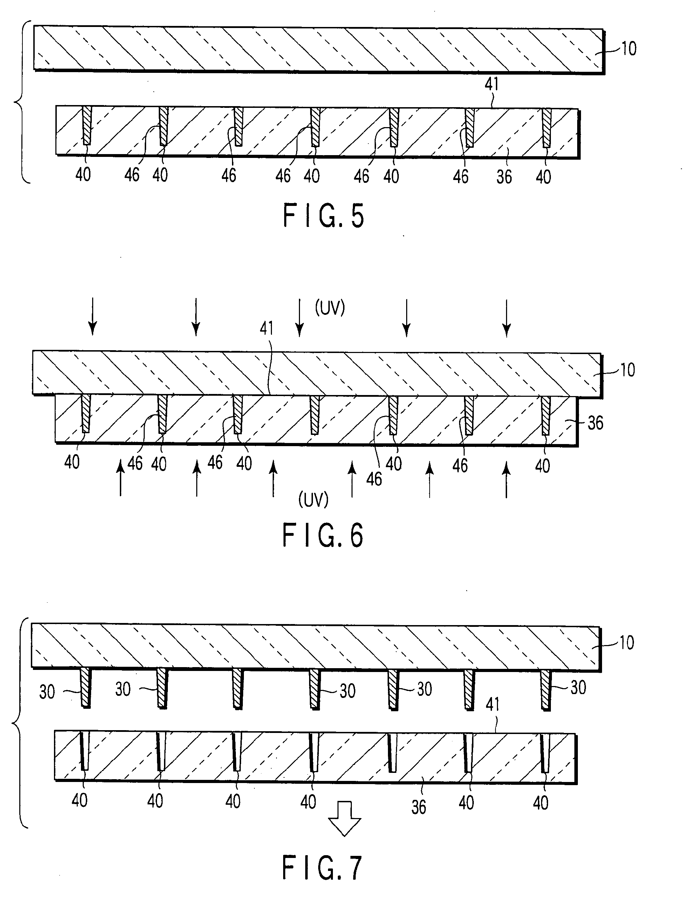

As shown in FIG. 5, a glass substrate with a predetermined size as the first substrate 10 and a molding die in the form of a rectangular plate with a size a little smaller than that of the first substrate are prepared first. The molding die 36 is a flat plate formed of a transparent material that transmits ultraviolet rays, e.g., clear silicone consisting mainly of clear polyethylene terephthalate. The molding die 36 has a flat contact surface 41 in contact with one surface of the first substrate 10 and a large number of bottomed spacer forming holes 40 for molding the spacers 30. The spacer forming holes 40 individually open in the contact surface 41 of the molding die 36 and are arranged at predetermined spaces. Each spacer forming hole 40 is formed having a size corresponding to each spacer 30.

Subsequently, the spacer forming holes 40 of the molding die 36 are filled with a spacer forming material 46. A glass paste that contains at least an ultraviolet-curing binder (organic component) and a glass filler is used as the spacer forming material 46. The specific gravity and viscosity of the glass paste are selected as required.

As shown in FIG. 6, the molding die 36 is positioned with respect to the first substrate 10, and the contact surface 41 is brought into close contact with the surface of the first substrate. By doing this, an assembly is formed combining the first substrate 10 and the molding die 36. Then, ultraviolet (UV) rays of 2,000 mJ are applied to the filled spacer forming material 46 from outside the first substrate 10 and the molding die 36 by using, for example, an ultraviolet lamp or the like, whereupon the spacer forming material 46 is UV-cured. In this case, the molding die 36 is formed of clear silicone as an ultraviolet-transmitting material. Accordingly, ultraviolet rays are applied to the spacer forming material 46 directly and through the molding die 36. Thus, the filled spacer forming material 46 can be securely cured to its inner part.

Thereafter, the molding die 36 is released from the first substrate 10 with the cured spacer forming material 46 left on the first substrate 10, as shown in FIG. 7. Then, after the first substrate 10 with the spacer forming material 46 thereon is heat-treated in a heating furnace so that the binder is evaporated from the spacer forming material, the spacer forming material 46 is regularly fired to be vitrified at about 500 to 550°C for 30 minutes to 1 hour. Thereupon, the large number of spacers 30 are collectively formed on the surface of the first substrate 10. The spacers 30 are fixed directly to the surface of the first substrate 10 by the adhesion of the spacer forming material itself and built in integrally with the first substrate.

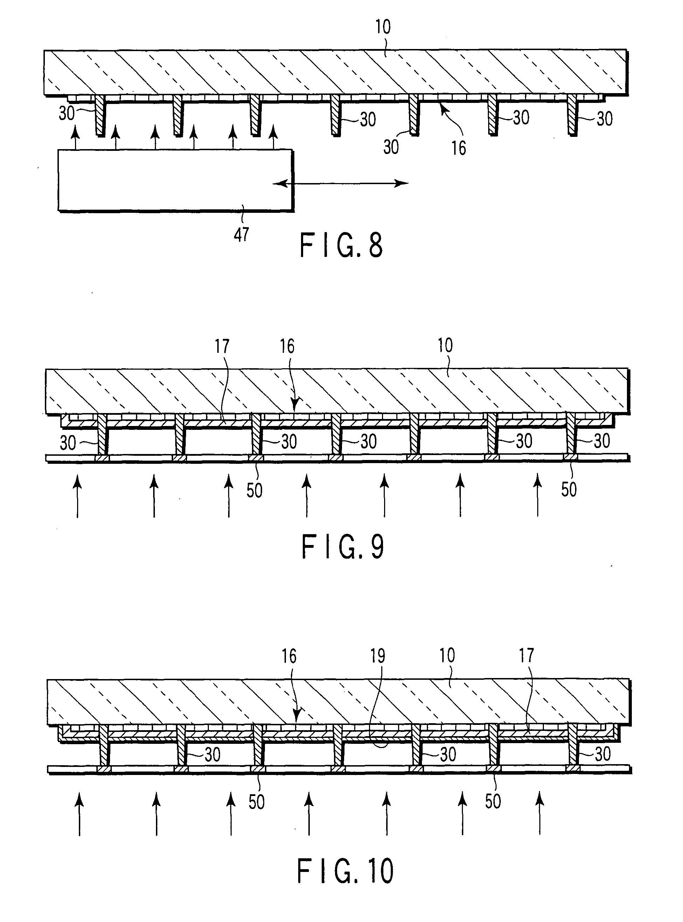

Then, the phosphor layers R, G and B and the light shielding layer 11 are successively formed by ink-jet printing on the surface of the first substrate 10 on which the spacers 30 are set up, as shown in FIG. 8, whereupon the phosphor screen 16 is formed. In this case, the phosphor screen 16 is formed by, for example, jetting ink from a print head 47 toward the first substrate 10 without soiling the spacers 30.

Subsequently, as shown in FIG. 9, after a mask 50, e.g., a plate-shaped or mesh-like metal mask, is located covering the respective extended ends of the spacers 30, aluminum or the like, for example, is vapor-deposited on the phosphor screen 16 to form the metal back 17 thereon. Since the spacers 30 are covered by the mask 50 when this is done, the metal back 17 can be formed without soiling the spacers.

In the manufacture of the SED, on the other hand, electron emitting elements 18 and the wires 21 are provided separately, and the second substrate 12, to which the sidewall 14 is joined, is prepared in advance. Subsequently, the first substrate 10 obtained in the aforesaid manner and the second substrate 12 are located in a vacuum chamber, and the vacuum chamber is evacuated. With the extended ends of the spacers 30 covered by the mask 50 or another mask for a getter, as shown in FIG. 10, the getter film 19 is formed on the metal back 17 of the first substrate 10 by evaporating the getter. Since the spacers 30 are covered by the mask 50 when this is done, the getter film 19 can be formed without soiling the spacers.

After the getter film is formed, the mask 50 is removed from the spacers 30. Thereafter, the first substrate 10 and the second substrate 12 are joined together with the sidewall 14 between them in a vacuum. In this manner, the SED provided with the spacers 30 is manufactured.

According to the SED constructed in this manner and its manufacturing method, the spacers are formed directly on the substrate by a batch forming method using the molding die and the spacer forming material, and thereafter, the spacer forming material is fired to be vitrified to form the spacers. By doing this, a large number of spacers can be directly fixedly formed on the substrate without using an adhesive. Thus, a plurality of spacers can be easily provided with high accuracy without using any supporting substrate. At the same time, there may be obtained the SED and its manufacturing method capable of mass production and reduction in manufacturing cost.

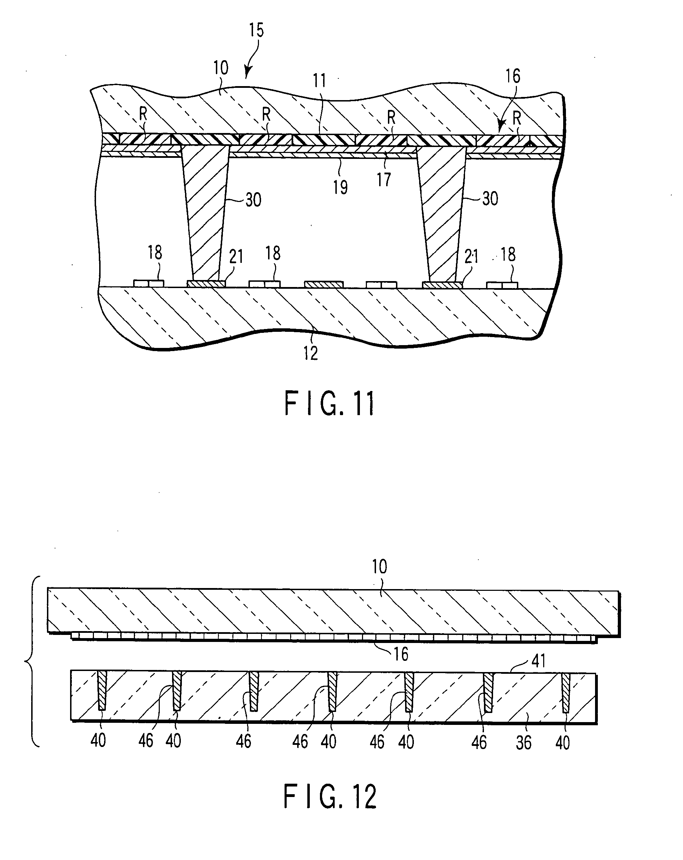

The following is a description of an SED according to a second embodiment of this invention. As shown in FIG. 11, the SED is provided with a large number of spacers 30 that are arranged between a first substrate 10 and a second substrate 12. According to the second embodiment, the spacers 30 are set up integrally on a phosphor screen 16 on the first substrate 10. Specifically, the spacers 30 are directly fixedly formed on a light shielding layer 11 of the phosphor screen 16 by firing and vitrifying a spacer forming material as a dielectric material that consists mainly of glass. The respective extended ends of the spacers 3 abut on the inner surface of the second substrate 12, that is, on wires 21 provided on the inner surface of the second substrate 12 in this case. Each of the spacers 30 is tapered so that its diameter is reduced from its proximal end on the side of the first substrate 10 toward its extended end. The cross section of each spacer 30 along a direction parallel to the inner surface of the first substrate 10 is substantially elliptical.

Other configurations of the SED are the same as those of the foregoing first embodiment, so that like reference numerals are used to designate like portions, and a detailed description thereof is omitted.

The following is a description of a manufacturing method for the SED constructed in this manner. A manufacturing method for the first substrate 10 and the spacers 30 will be described first.

As shown in FIG. 12, a glass substrate with a predetermined size as the first substrate 10 and a molding die in the form of a rectangular plate with a size a little smaller than that of the first substrate are prepared first. The molding die 36 is a flat plate formed of a transparent material that transmits ultraviolet rays, e.g., clear silicone consisting mainly of clear polyethylene terephthalate. The molding die 36 has a flat contact surface 41a in contact with one surface of the first substrate 10 and a large number of bottomed spacer forming holes 40 for molding the spacers 30: The spacer forming holes 40 individually open in the contact surface 41 of the molding die 36 and are arranged at predetermined spaces. Each spacer forming hole 40 is formed having a size corresponding to each spacer 30.

Then, the phosphor screen 16 having phosphor layers R, G and B and the light shielding layer 11 is formed on the one surface of the first substrate 10 by a conventional method. Thereafter, the spacer forming holes 40 of the molding die 36 are filled with a spacer forming material 46. A glass paste that contains at least an ultraviolet-curing binder (organic component) and a glass filler is used as the spacer forming material 46. The specific gravity and viscosity of the glass paste are selected as required.

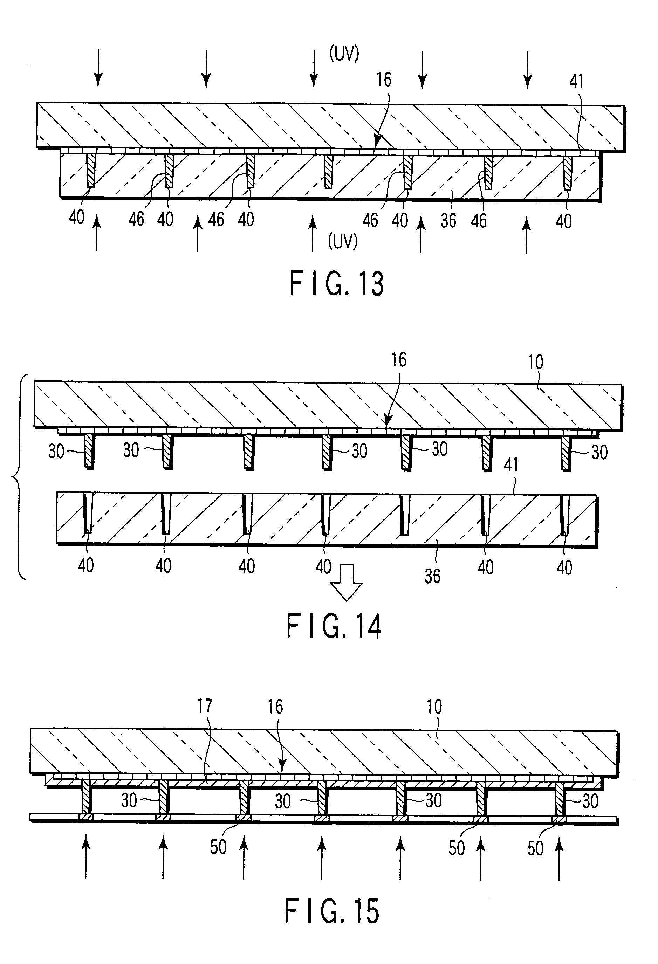

As shown in FIG. 13, the molding die 36 is positioned with respect to the first substrate 10, and the contact surface 41 is brought into close contact with the phosphor screen 16. When this is done, the molding die 36 is positioned so that the spacer forming holes 40 severally face the light shielding layer 11. By doing this, an assembly is formed combining the first substrate 10 and the molding die 36.

Then, ultraviolet (UV) rays of 2,000 mJ are applied to the loaded spacer forming material 46 from outside the first substrate 10 and the molding die 36 by using, for example, an ultraviolet lamp or the like, whereupon the spacer forming material 46 is UV-cured. In this case, the molding die 36 is formed of clear silicone as an ultraviolet-transmitting material. Accordingly, ultraviolet rays are applied to the spacer forming material 46 directly and through the molding die 36. Thus, the filled spacer forming material 46 can be securely cured to its inner part.

Subsequently, the molding die 36 is released from the first substrate 10 with the cured spacer forming material 46 left on the first substrate 10, as shown in FIG. 14. Then, after the first substrate 10 with the spacer forming material 46 thereon is heat-treated in the heating furnace so that the binder is evaporated from the spacer forming material, the spacer forming material 46 is regularly fired to be vitrified at about 500 to 550°C for 30 minutes to 1 hour. Thereupon, the large number of spacers 30 are collectively formed on the surface of the first substrate 10. The spacers 30 are fixed directly to the light shielding layer 11 by the adhesion of the spacer forming material itself and built in integrally with the first substrate.

Thereafter, as shown in FIG. 15, after a mask 50, e.g., a plate-shaped or mesh-like metal mask, is located covering the respective extended ends of the spacers 30, aluminum or the like, for example, is vapor-deposited on the phosphor screen 16 to form a metal back 17 thereon. Since the spacers 30 are covered by the mask 50 when this is done, the metal back 17 can be formed without soiling the spacers.

In the manufacture of the SED, electron emitting elements 18 and the wires 21 are provided separately, and the second substrate 12, to which a sidewall 14 is joined, is prepared in advance. Subsequently, the first substrate 10 obtained in the aforesaid manner and the second substrate 12 are located in the vacuum chamber, and the vacuum chamber is evacuated.

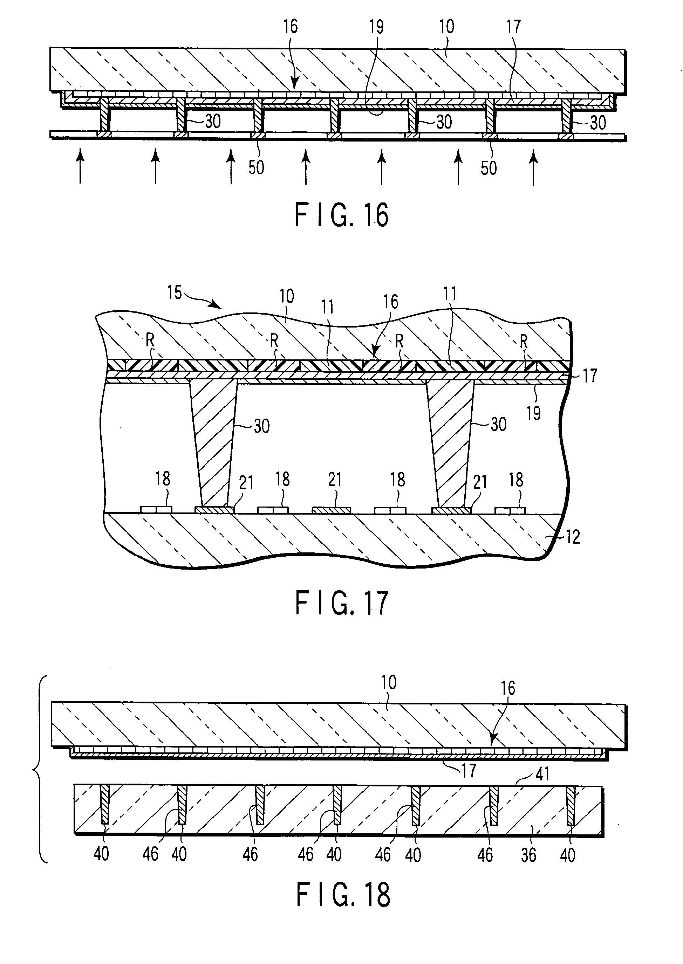

With the extended ends of the spacers 30 covered by the mask 50 or another mask for a getter, as shown in FIG. 16, a getter film 19 is formed on the metal back 17 of the first substrate 10 by evaporating the getter. Since the spacers 30 are covered by the mask 50 when this is done, the getter film 19 can be formed without soiling the spacers. After the getter film is formed, the mask 50 is removed from the spacers 30. Thereafter, the first substrate 10 and the second substrate 12 are joined together with the sidewall 14 between them in a vacuum. In this manner, the SED provided with the spacers 30 is manufactured.

According to the SED constructed in this manner and its manufacturing method, the spacers are formed directly on the substrate by the batch forming method using the molding die and the spacer forming material, and thereafter, the spacer forming material is fired to be vitrified to form the spacers. By doing this, a large number of spacers can be directly fixedly formed on the phosphor screen without using an adhesive. Thus, a plurality of spacers can be easily provided with high accuracy without using any supporting substrate. At the same time, there may be obtained the SED and its manufacturing method capable of mass production and reduction in manufacturing cost.

The following is a description of an SED according to a third embodiment of this invention. As shown in FIG. 17, the SED is provided with a large number of spacers 30 that are arranged between a first substrate 10 and a second substrate 12. According to the third embodiment, the spacers 30 are set up integrally on a metal back 17 of the first substrate 10. Specifically, a phosphor screen 16 is formed on the inner surface of the first substrate 10, and the metal back 17 of, for example, aluminum or the like is formed overlapping the phosphor screen. The spacers 30 are directly fixedly formed on the metal back 17 by firing and vitrifying a spacer forming material as a dielectric material that consists mainly of glass.

The respective extended ends of the spacers 3 abut on the inner surface of the second substrate 12, that is, on wires 21 provided on the inner surface of the second substrate 12 in this case. Each of the spacers 30 is tapered so that its diameter is reduced from its proximal end on the side of the first substrate 10 toward its extended end. The cross section of each spacer 30 along a direction parallel to the inner surface of the first substrate 10 is substantially elliptical.

Other configurations of the SED are the same as those of the foregoing first embodiment, so that like reference numerals are used to designate like portions, and a detailed description thereof is omitted.

The following is a description of a manufacturing method for the SED constructed in this manner. A manufacturing method for the first substrate 10 and the spacers 30 will be described first.

As shown in FIG. 18, a glass substrate with a predetermined size as the first substrate 10 is prepared first. Then, the phosphor screen 16 having phosphor layers R, G and B and light shielding layer 11 is formed on one surface of the first substrate 10 by a conventional method. For example, aluminum is vapor-deposited on the phosphor screen 16 to form the metal back 17 thereon.

Then, a molding die in the form of a rectangular plate with a size a little smaller than that of the first substrate is prepared. The molding die 36 is a flat plate formed of a transparent material that transmits ultraviolet rays, e.g., clear silicone consisting mainly of clear polyethylene terephthalate. The molding die 36 has a flat contact surface 41a in contact with one surface of the first substrate 10 and a large number of bottomed spacer forming holes 40 for molding the spacers 30. The spacer forming holes 40 individually open in the contact surface 41 of the molding die 36 and are arranged at predetermined spaces. Each spacer forming hole 40 is formed having a size corresponding to each spacer 30.

Then, the spacer forming holes 40 of the molding die 36 are filled with a spacer forming material 46. A glass paste that contains at least an ultraviolet-curing binder (organic component) and a glass filler is used as the spacer forming material 46. The specific gravity and viscosity of the glass paste are selected as required.

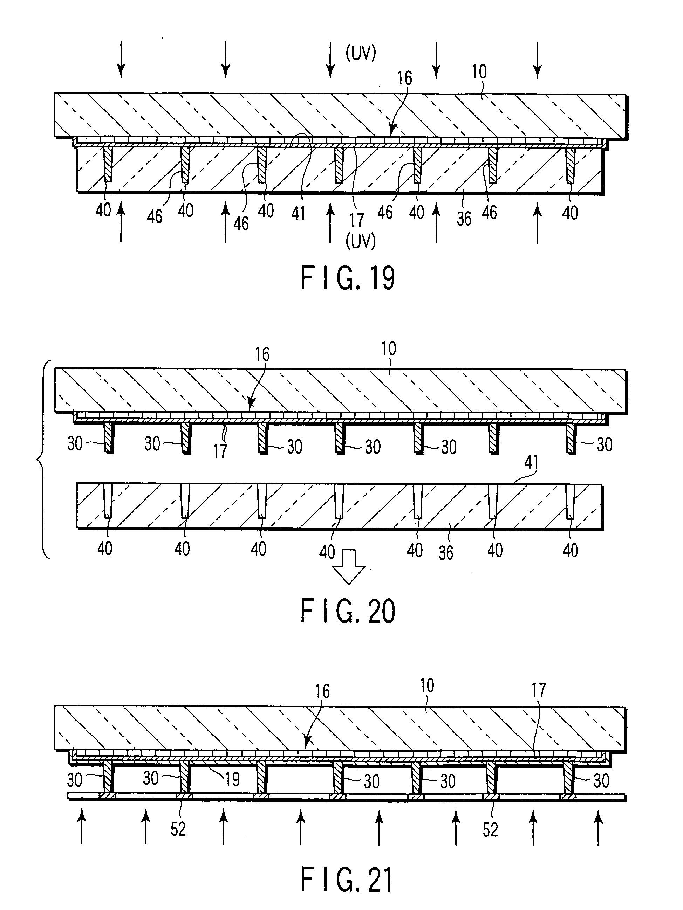

As shown in FIG. 19, the molding die 36 is positioned with respect to the first substrate 10, and the contact surface 41 is brought into close contact with the metal back 17. When this is done, the molding die 36 is positioned so that the spacer forming holes 40 severally face the light shielding layer 11. By doing this, an assembly is formed combining the first substrate 10 and the molding die 36.

Then, ultraviolet (UV) rays of 2,000 mJ are applied to the loaded spacer forming material 46 from outside the first substrate 10 and the molding die 36 by using, for example, an ultraviolet lamp or the like, whereupon the spacer forming material 46 is UV-cured. In this case, the molding die 36 is formed of clear silicone as an ultraviolet-transmitting material. Accordingly, ultraviolet rays are applied to the spacer forming material 46 directly and through the molding die 36. Thus, the filled spacer forming material 46 can be securely cured to its inner part.

Subsequently, the molding die 36 is released from the first substrate 10 with the cured spacer forming material 46 left on the metal back 17, as shown in FIG. 20. After the first substrate 10 with the spacer forming material 46 thereon is heat-treated in the heating furnace so that the binder is evaporated from the spacer forming material, moreover, the spacer forming material 46 is regularly fired to be vitrified at about 500 to 550°C for 30 minutes to 1 hour. Thereupon, the large number of spacers 30 are collectively formed on the metal back 17 of the first substrate 10. The spacers 30 are fixed directly to the metal back 17 by the adhesion of the spacer forming material itself and built in integrally with the first substrate.

In the manufacture of the SED, on the other hand, electron emitting elements 18 and the wires 21 are provided separately, and the second substrate 12, to which a sidewall 14 is joined, is prepared in advance. Subsequently, as shown in FIG. 21, after a mask 52, e.g., a plate-shaped metal mask, is located covering the respective extended ends of the spacers 30, the first substrate 10 and the second substrate 12 are located in the vacuum chamber, and the vacuum chamber is evacuated.

A getter film 19 is formed on the metal back 17 of the first substrate 10 by evaporating a getter in a vacuum. Since the spacers 30 are covered by the mask 5 when this is done, the getter film 19 can be formed without soiling the spacers. After the getter film is formed, the mask 52 is removed from the spacers 30. Thereafter, the first substrate 10 and the second substrate 12 are joined together with the sidewall 14 between them in a vacuum. In this manner, the SED provided with the spacers 30 is manufactured.

According to the SED constructed in this manner and its manufacturing method, the spacers are formed directly on the substrate by the batch forming method using the molding die and the spacer forming material, and thereafter, the spacer forming material is fired to be vitrified to form the spacers. By doing this, a large number of spacers can be directly fixedly formed on the phosphor screen without using an adhesive. Thus, a plurality of spacers can be easily provided with high accuracy without using any supporting substrate. At the same time, there may be obtained the SED and its manufacturing method capable of mass production and reduction in manufacturing cost.

The present invention is not limited directly to the embodiments described above, and its components may be embodied in modified forms without departing from the spirit of the invention. Further, various inventions may be formed by suitably combining a plurality of components described in connection with the foregoing embodiments. For example, some of the components according to the embodiments may be omitted. Furthermore, components according to different embodiments may be combined as required.

The shape of the spacers and the dimensions, materials, etc. of the other components are not limited to the foregoing embodiments, but may be suitably selected as required.

The spacers are not limited to the aforementioned columnar spacers, but plate-like spacers may be used instead. Conditions for filling the spacer forming material may be selected variously. Further, this invention is not limited to image display devices that use surface-conduction electron emitting elements as electron sources, but may be also applied to image display devices that use other electron sources, such as the field-emission type, carbon nanotubes, etc.

### Industrial Applicability

According to this invention, there may be provided a manufacturing method for an image display device, in which a plurality of spacers can be easily provided with high accuracy without using any supporting substrate, and the image display device.

## Claims

1. A method of manufacturing an image display device, which comprises a first substrate formed having a phosphor screen including a phosphor layer and a light shielding layer, a second substrate located opposite the first substrate across a gap and provided with a plurality of electron emission sources which excite the phosphor screen, and a plurality of spacers which are arranged between the first substrate and the second substrate and support an atmospheric load acting on the first and second substrates, the method of manufacturing an image display device comprising:
preparing a molding die having a plurality of bottomed spacer forming holes;
filling in the individual spacer forming holes of the molding die with a spacer forming material consisting mainly of glass;
bringing the molding die filled with the spacer forming material into close contact with a glass substrate, which constitutes the first substrate, in a manner such that the spacer forming holes face the glass substrate;
releasing the molding die with the spacer forming material left on the glass substrate after curing the spacer forming material with the molding die in close contact with the glass substrate; and
forming the plurality of spacers severally fixed to the glass substrate by firing and vitrifying the spacer forming material on the glass substrate.

2. The method of manufacturing an image display device according to claim 1, wherein the light shielding layer and the phosphor layer are formed by ink jetting on a surface of the first substrate on which the spacers are formed.

3. The method of manufacturing an image display device according to claim 2, wherein a metal back is formed at least partially overlapping the light shielding layer and the phosphor layer after the spacers are covered by a mask.

4. The method of manufacturing an image display device according to claim 3, wherein the mask on the spacers is removed after a getter film is formed at least partially overlapping the light shielding layer, the phosphor layer, and the metal back.

5. A method of manufacturing an image display device, which comprises a first substrate formed having a phosphor screen including a phosphor layer and a light shielding layer, a second substrate located opposite the first substrate across a gap and provided with a plurality of electron emission sources which excite the phosphor screen, and a plurality of spacers which are provided between the first substrate and the second substrate and support an atmospheric load acting on the first and second substrates, the method of manufacturing an image display device comprising:
preparing a molding die having a plurality of bottomed spacer forming holes and a first substrate formed having a phosphor screen;
filling in the individual spacer forming holes of the molding die with a spacer forming material consisting mainly of glass;
bringing the molding die filled with the spacer forming material into close contact with the first substrate in a manner such that the spacer forming holes face the light shielding layer on the first substrate;
releasing the molding die with the spacer forming material left on the first substrate after curing the spacer forming material with the molding die in close contact with the first substrate; and
forming the plurality of spacers severally fixed on the light shielding layer by firing and vitrifying the spacer forming material on the first substrate.

6. The method of manufacturing an image display device according to claim 5, wherein a metal back is formed at least partially overlapping the phosphor layer after the spacers are covered by a mask.

7. The method of manufacturing an image display device according to claim 6, wherein a getter film is formed at least partially overlapping the light shielding layer, the phosphor layer, and the metal back, and the mask on the spacers is removed thereafter.

8. A method of manufacturing an image display device, which comprises a first substrate formed having a phosphor screen including a phosphor layer and a light shielding layer, a second substrate located opposite the first substrate across a gap and provided with a plurality of electron emission sources which excite the phosphor screen, and a plurality of spacers which are provided between the first substrate and the second substrate and support an atmospheric load acting on the first and second substrates, the method of manufacturing an image display device comprising:
preparing a molding die having a plurality of bottomed spacer forming holes and a first substrate formed having a phosphor screen;
forming as a metal back overlapping the phosphor screen of the first substrate;
filling in the individual spacer forming holes of the molding die with a spacer forming material consisting mainly of glass;
bringing the molding die filled with the spacer forming material into close contact with the first substrate in a manner such that the spacer forming holes face the light shielding layer on the first substrate;
releasing the molding die with the spacer forming material left on the first substrate after curing the spacer forming material with the molding die in close contact with the first substrate; and
forming the plurality of spacers severally fixed on the metal back by firing and vitrifying the spacer forming material on the first substrate.

9. The method of manufacturing an image display device according to claim 8, wherein a getter film is formed at least partially overlapping the light shielding layer, the phosphor layer, and the metal back after the spacers are covered by a mask, and the mask on the spacers is removed thereafter.

10. An image display device comprising:
a first substrate formed having a phosphor screen including a phosphor layer and a light shielding layer;
a second substrate located opposite the first substrate across a gap and provided with a plurality of electron emission sources which excite the phosphor screen; and
a plurality of spacers which are arranged between the first substrate and the second substrate and support an atmospheric load acting on the first and second substrates,
the plurality of spacers being directly fixedly formed on an inner surface of the first substrate by firing and vitrifying a spacer forming material consisting mainly of glass.

11. The image display device according to claim 10, wherein the phosphor screen is provided on an inner surface of the first substrate between the plurality of spacers.

12. The image display device according to claim 11, which comprises a metal back provided overlapping the phosphor screen between the plurality of spacers.

13. An image display device comprising:
a first substrate formed having a phosphor screen including a phosphor layer and a light shielding layer;
a second substrate located opposite the first substrate across a gap and provided with a plurality of electron emission sources which excite the phosphor screen; and
a plurality of spacers which are arranged between the first substrate and the second substrate and support an atmospheric load acting on the first and second substrates,
the plurality of spacers being directly fixedly formed on the light shielding layer on the first substrate by firing and vitrifying a spacer forming material consisting mainly of glass.

14. The image display device according to claim 13, which comprises a metal back provided overlapping the phosphor screen between the plurality of spacers.

15. An image display device comprising:
a first substrate provided with a phosphor screen, which includes a phosphor layer and a light shielding layer, and a metal back formed overlapping the phosphor screen;
a second substrate located opposite the first substrate across a gap and provided with a plurality of electron emission sources which excite the phosphor screen; and
a plurality of spacers which are arranged between the first substrate and the second substrate and support an atmospheric load acting on the first and second substrates,
the plurality of spacers being directly fixedly formed on the metal back of the first substrate by firing and vitrifying a spacer forming material consisting mainly of glass.
